# EUROPEAN PATENT APPLICATION

(11) **EP 3 754 767 A1**
(43) Date of publication of application: **23.12.2020**
(21) Application number: 18906335.7
(22) Date of filing: 15.02.2018
(51) Int. Cl.: H01M 4/76, H01M 4/14

(54) **ACTIVE MATERIAL HOLDING TUBE, ELECTRODE, AND LEAD STORAGE BATTERY**

(71) Applicant: Hitachi Chemical Company, Ltd., Chiyoda-ku, Tokyo 100-6606 (JP)
(72) Inventor: SUZUKI, Keita, Tokyo 100-6606 (JP)
(74) Representative: Hoffmann Eitle
(86) International application number: PCT/JP2018/005306
(87) International publication number: WO 2019/159287

(57) **Abstract**

An aspect of the present invention provides an active material holding tube formed to have a hollow cylindrical shape by stacking at least two fiber base materials, wherein the two fiber base materials have different ratios of a tensile strength in a direction perpendicular to an axial direction to tensile strengths in the axial direction from each other.

## Description

### Technical Field

The present invention relates to an active material holding tube, an electrode, and a lead storage battery.

### Background Art

Lead storage batteries are widely used as secondary batteries for industrial use or consumer use. Particularly, there is a great demand for lead storage batteries for an electric car (for example, batteries for a forklift), and back-up lead storage batteries for an uninterruptible power supply (UPS), disaster prevention (emergency) radio communication, telephones, or the like.

For example, a lead storage battery is constituted of cylindrical tubes, core bars (current collectors) inserted into the tubes, and electrode materials filling spaces between the tubes and the core bars. For example, regarding a cylindrical tube, Patent Literature 1 discloses a woven fabric tube having glass fibers or synthetic fibers as main components.

### Citation List

### Patent Literature

[Patent Literature 1] Japanese Unexamined Patent Publication No. H8-203506

### Summary of Invention

### Technical Problem

Incidentally, in order to favorably use a lead storage battery for a long period of time, it is important to improve cycle characteristics of the lead storage battery.

An object of the present invention is to provide an active material holding tube capable of improving cycle characteristics of a lead storage battery and an electrode using this. In addition, another object of the present invention is to provide a lead storage battery having excellent cycle characteristics.

### Solution to Problem

According to a first aspect of the present invention, there is provided an active material holding tube formed to have a hollow cylindrical shape by stacking at least two fiber base materials, wherein the two fiber base materials have different ratios of a tensile strength in a direction perpendicular to an axial direction to tensile strengths in the axial direction from each other.

In the first aspect, preferably, an outer fiber base material has the tensile strength in the axial direction greater than the tensile strength in the direction perpendicular to the axial direction, and an inner fiber base material has the tensile strength in the axial direction smaller than the tensile strength in the direction perpendicular to the axial direction.

According to a second aspect of the present invention, there is provided an active material holding tube formed to have a hollow cylindrical shape by stacking at least two fiber base materials, wherein in the two fiber base materials, any one of a first ratio indicating a ratio of a tensile strength in an axial direction of an outer fiber base material to a tensile strength in the axial direction of an inner fiber base material and a second ratio indicating a ratio of a tensile strength in a direction perpendicular to the axial direction of the outer fiber base material to a tensile strength in the direction perpendicular to the axial direction of the inner fiber base material is larger than 1, and the other is smaller than 1

In the second aspect, preferably, the first ratio is larger than 1, and the second ratio is smaller than 1.

According to a third aspect of the present invention, there is provided an active material holding tube formed to have a hollow cylindrical shape by stacking at least two fiber base materials, wherein the two fiber base materials have fiber orientations and are stacked such that angles formed by an axial direction of the active material holding tube and directions of the fiber orientations differ from each other.

In the third aspect, preferably, an angle formed by the axial direction and the direction of the fiber orientation of an outer fiber base material is smaller than an angle formed by the axial direction and the direction of the fiber orientation of an inner fiber base material.

In the first to third aspects, the active material holding tube has a ratio of the tensile strength in the direction perpendicular to the axial direction to the tensile strength in the axial direction of 0.5 to 2.6.

In the first to third aspects, preferably, a base weight amount of at least one of the two fiber base materials is 50 g/m² or larger.

According to a fourth aspect of the present invention, there is provided an electrode including the foregoing active material holding tube, and a core bar and an electrode material disposed inside the active material holding tube.

According to a fifth aspect of the present invention, there is provided a lead storage battery including the foregoing electrode as a positive electrode.

### Advantageous Effects of Invention

According to the present invention, it is possible to provide an active material holding tube capable of improving cycle characteristics of a lead storage battery and an electrode using this. In addition, the present invention can provide a lead storage battery having excellent cycle characteristics.

### Brief Description of Drawings

FIG. 1 is a schematic cross-sectional view showing a lead storage battery according to an embodiment.
FIG. 2(a) is a perspective view schematically showing an active material holding tube group according to the embodiment, and FIG 2(b) is an enlarged view showing a part of the active material holding tube group in FIG. 2(a).
FIG. 3(a) is an exploded perspective view showing a main part of the active material holding tube shown in FIG. 2, and FIG 3(b) is a schematic view for describing tensile strengths of fiber base materials constituting the active material holding tube shown in FIG. 3(a).

### Description of Embodiment

Hereinafter, an embodiment of the present invention will be described suitably with reference to the drawings. However, the present invention is not limited to the following embodiment. In each diagram, the sizes of constituent elements are conceptual, and a relative relationship between the sizes of the constituent elements is not limited to that shown in each diagram.

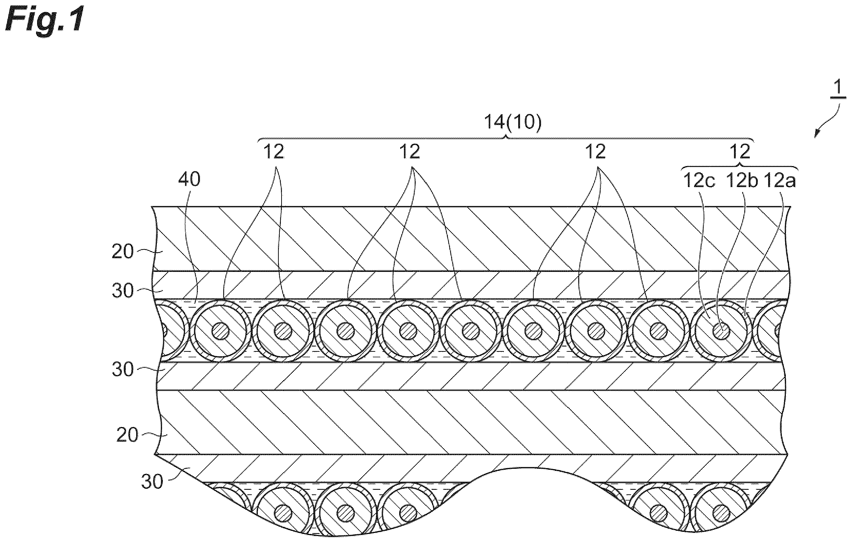

FIG. 1 is a schematic cross-sectional view showing a lead storage battery according to the embodiment. As shown in FIG. 1, a lead storage battery 1 is a lead storage battery including positive electrodes 10, negative electrodes 20, and separators 30. The positive electrodes 10, the negative electrodes 20, and the separators 30 are accommodated inside a battery case (not shown in the diagram). The positive electrodes 10 and the negative electrodes 20 are disposed alternately with the separator 30 therebetween. The inside of the battery case is filled with an electrolytic solution 40.

One surface of the separator 30 comes into contact with the positive electrode 10, and the other surface of the separator 30 comes into contact with the negative electrode 20. Each of the positive electrode 10 and the negative electrode 20 is sandwiched between the separators 30. Each of the positive electrode 10 and the negative electrode 20 may be sandwiched between two separators or may be sandwiched by one folded separator. A space around the positive electrode 10 between the separators 30 and 30 is filled with the electrolytic solution 40.

A material of the separator 30 is not particularly limited as long as it inhibits electrical connection between the positive electrode and the negative electrode and allows an electrolytic solution to permeate therethrough. Examples of a material of the separator 30 include microporous polyethylene; and a mixture of glass fibers and a synthetic resin.

The negative electrode 20 has a plate shape and is a paste-type negative electrode plate, for example. The negative electrode 20 has a negative electrode current collector and a negative electrode material held by the negative electrode current collector. A plate-shaped current collector can be used as the negative electrode current collector. A composition of the negative electrode current collector may be the same as or different from a composition of a core bar of the positive electrode, which will be described below.

After formation, the negative electrode material contains a negative electrode active material and can further contain an additive as necessary. A negative electrode material after formation can be obtained through formation from an unformed negative electrode material after the unformed negative electrode material is obtained by curing and drying a negative electrode material paste including a raw material for a negative electrode active material, for example. Examples of a raw material for a negative electrode active material include a lead powder and a lead oxide powder. Examples of a negative electrode active material in a negative electrode material after formation include porous spongy lead.

Examples of an additive for a negative electrode material include short fibers for reinforcement such as acrylic fibers, polyethylene fibers, polypropylene fibers, and polyethylene terephthalate fibers (PET fibers); barium sulfate; a carbon material (carbonaceous conductive material); and a resin having at least one kind selected from the group consisting of a sulfone group and a sulfonate group (a resin having a sulfone group and/or a sulfonate group).

Examples of a carbon material include carbon black and graphite. Examples of carbon black include furnace black (Ketjen black (registered trademark) or the like), channel black, acetylene black, and thermal black.

Examples of a resin having a sulfone group and/or a sulfonate group include lignin sulfonic acid, lignin sulfonate, and a condensate of phenols, aminoaryl sulfonic acid, and formaldehyde. Examples of lignin sulfonate include alkali metal salts of lignin sulfonic acid. Examples of phenols include a bisphenol-based compound such as bisphenol. Examples of aminoaryl sulfonic acid include aminobenzene sulfonic acid and aminonaphthalene sulfonic acid.

The positive electrode 10 has a plate shape and is an electrode (positive electrode plate) constituted of a cylindrical electrode group 14 constituted of a plurality of cylindrical electrodes (rod-shaped electrodes) 12 arranged parallel to each other, for example. The number of cylindrical electrodes 12 is 2 to 19, for example. Each of the cylindrical electrodes 12 has an active material holding tube (which is also referred to as "Gauntlet" and may hereinafter be simply referred to as a tube) 12a, a core bar (current collector) 12b inserted into the tube 12a, and a positive electrode material 12c filling a space between the tube 12a and the core bar 12b. The positive electrode material 12c contains a positive electrode active material after formation, and the tube 12a holds at least an active material (positive electrode active material).

Connected seats (not shown in the diagram) for holding the tubes 12a and the core bars 12b are attached to both end parts of the tubes 12a in an axial direction. An upper connected seat is attached to end parts (opening portions for inserting the core bars 12b and filling with a raw material (a lead powder or the like) for a positive electrode material) of the tubes 12a on one side in the axial direction. A lower connected seat is attached to end parts (bottom parts of the tubes 12a) of the tubes 12a on the other side in the axial direction. The upper connected seat and the lower connected seat are not necessarily provided on both sides, and at least the lower connected seat need only be provided.

The core bars 12b are disposed in center parts of the tubes 12a in the axial direction of the tubes 12a. The core bars 12b can be obtained through casting performed by a pressure casting method, for example. The constituent material of the core bar 12b need only be a conductive material, and examples thereof include lead alloys such as a lead-calcium-tin alloy and a lead-antimony-arsenic alloy. The lead alloys may include selenium, silver, bismuth, or the like. The cross-sectional shape of the core bar 12b perpendicular to a longitudinal direction may be a circular shape, an elliptical shape, or the like. The length of the core bar 12b is 170 to 400 mm, for example. The diameter of the core bar 12b is 2.0 to 4.0 mm, for example.

From the viewpoint of excellent strength and hardness of the core bars 12b, the content of antimony in the core bars 12b is preferably 2.0 mass% or more, more preferably 3.0 mass% or more, and further preferably 4.0 mass% or more. From the viewpoint of excellent corrosion resistance and the viewpoint of being easy to curb self-discharge, the content of antimony is preferably 8.0 mass% or less, more preferably 5.0 mass% or less, and further preferably 4.0 mass% or less. The content of antimony can be measured through a high-frequency inductive coupling plasma emission analysis (ICP emission analysis), for example.

After formation, the positive electrode material 12c contains a positive electrode active material and can further contain an additive as necessary. For example, a positive electrode material after formation can be obtained through formation of an unformed positive electrode material including a raw material for a positive electrode active material. For example, a positive electrode material after formation may be obtained through formation of an unformed positive electrode material after the unformed positive electrode material is obtained by curing and drying a positive electrode material paste including a raw material for a positive electrode active material. Examples of a raw material for a positive electrode active material include a lead powder and red lead. Examples of a positive electrode active material in a positive electrode material after formation include lead dioxide. Examples of an additive for a positive electrode material include short fibers for reinforcement such as acrylic fibers, polyethylene fibers, polypropylene fibers, and polyethylene terephthalate fibers (PET fibers); graphite; and tetrabasic lead sulfate.

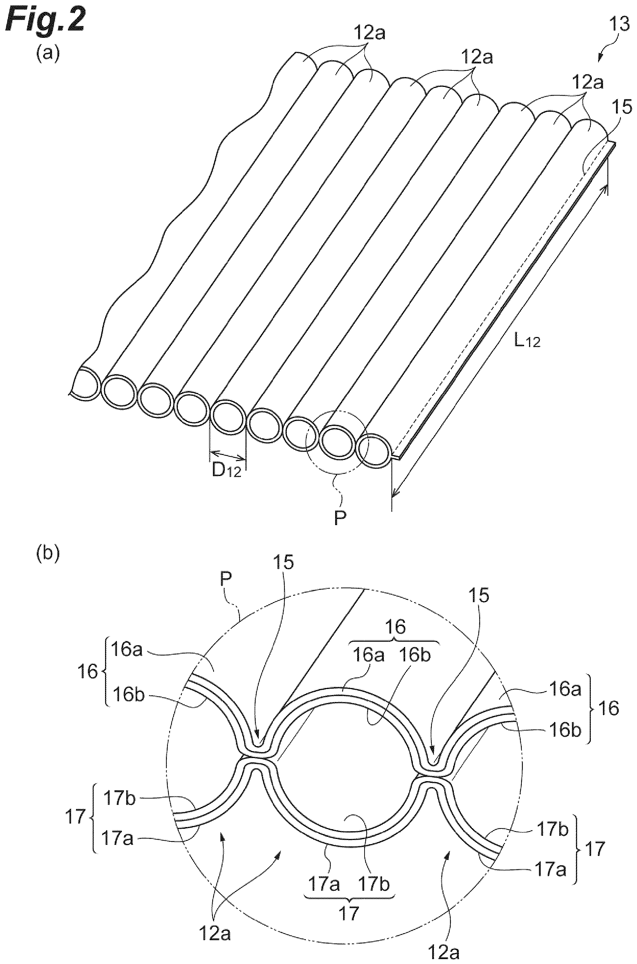

The tubes 12a are included in the cylindrical electrode group 14 as an active material holding tube group (which may hereinafter be simply referred to as "a tube group") constituted of a plurality of tubes 12a. FIG. 2(a) is a perspective view schematically showing the active material holding tube group according to the embodiment. As shown in FIG. 2(a), a tube group 13 includes the plurality of tubes 12a arranged parallel to each other. The number of tubes 12a included in the tube group 13 may be 2 to 19.

The tube 12a has a hollow cylindrical shape. The cross-sectional shape of the tube 12a perpendicular to the axial direction (longitudinal direction) may be a circular shape, an elliptical shape, a rounded square shape, or the like. A length L₁₂ of the tube 12a in the axial direction is 160 to 400 mm, for example. A diameter (outer diameter) D₁₂ of the tube 12a is 5 to 12 mm, for example.

In the tube group 13, for example, each of the tubes 12a is formed by suturing laminates of a pair of fiber base materials to each other in the axial direction with a predetermined interval therebetween (an interval corresponding to the diameter (outer diameter) D₁₂ of the tube 12a) (this will be described below in detail). That is, in the tube group 13, a connection portion 15 formed with sutures realized by suturing is provided between the tubes 12a. The sutures may be sutures realized by lock stitching, single-chain stitching, double-chain stitching, or covering chain stitching.

FIG. 2(b) is an enlarged view showing a part P of the tube group 13 in FIG. 2(a). As shown in FIG. 2(b), the tube 12a is formed to have a hollow cylindrical shape by stacking two fiber base materials (which may hereinafter be simply referred to as a base material). More specifically, the tube 12a has a cylindrical shape in which a first base material laminate 16 constituting a substantially one half cylinder part of the tube 12a and a second base material laminate 17 constituting a substantially the other half cylinder part thereof are connected (sutured) to each other in the connection portion 15.

The first base material laminate 16 is a laminate having a first outer base material 16a disposed on the outward side of the tube 12a and a first inner base material 16b disposed on the inward side (hollow side) of the tube 12a. The second base material laminate 17 is a laminate having a second outer base material 17a disposed on the outward side of the tube 12a and a first inner base material 17b disposed on the inward side (hollow side) of the tube 12a. The first base material laminate 16 may be the same as or different from the second base material laminate 17 and is preferably the same as the second base material laminate 17. That is, the first outer base material 16a and the first inner base material 16b may be the same as or different from the second outer base material 17a and the second inner base material 17b respectively and are preferably the same as the second outer base material 17a and the second inner base material 17b.

Each of the fiber base materials 16a, 16b, 17a, and 17b constituting the base material laminates 16 and 17 is a base material formed of fibers. In the embodiment, each of the fiber base materials 16a, 16b, 17a, and 17b may be a woven fabric or a non-woven fabric formed of polymer fibers such as of polyolefin, polyethylene terephthalate, polystyrene, polyvinyl chloride, polyvinylidene chloride, polyvinylidene fluoride, and polycarbonate, or inorganic fibers such as glass, silicon carbide, or alumina and is preferably a woven fabric or a non-woven fabric formed of polyolefin fibers.

When the base materials 16a, 16b, 17a, and 17b are formed of polyolefin fibers, for example, the polyolefin includes at least one kind of olefin (alkene) having 2 to 3 carbon atoms as a monomer unit. The polyolefin preferably includes at least one kind selected from the group consisting of ethylene and propylene as a monomer unit. The base materials 16a, 16b, 17a, and 17b are preferably formed of polyethylene fibers, polypropylene fibers, or a mixture of these. The weight-average molecular weight of the polyolefin may be 10,000 to 10,000,000, for example.

The base materials 16a, 16b, 17a, and 17b are porous materials having pores. From the viewpoint of curbing outflow of the positive electrode material and further improving cycle characteristics, the average pore diameters of the base materials 16a, 16b, 17a, and 17b are preferably 50 µm or smaller, more preferably 25 µm or smaller, and further preferably 10 µm or smaller. From the viewpoint of being able to reduce electrical resistance and further improving discharge performance, the average pore diameters of the base materials 16a, 16b, 17a, and 17b are preferably 1 µm or larger, more preferably 5 µm or larger, and further preferably 10 µm or larger. The average pore diameter is measured using a pore distribution measuring device (for example, AUTO PORE IV 9520 manufactured by Shimadzu Corporation).

From the viewpoint of reducing resistance due to the electrolytic solution, the base weight amount of at least one of the base materials 16a and 16b is preferably 100 g/m² or smaller, more preferably 80 g/m² or smaller, and further preferably 70 g/m² or smaller. From the viewpoint of having superior cycle characteristics, the base weight amount of at least one of the base materials 16a and 16b is preferably 50 g/m² or larger, more preferably 60 g/m² or larger, and further preferably 70 g/m² or larger. More preferably, the base weight amounts of both the base materials 16a and 16b are within the foregoing ranges. The base weight amounts of the base materials 17a and 17b may be similar to those of the base materials 16a and 16b. The base weight amount means a mass per unit area measured on the basis of JIS L1913.

From the viewpoint of reducing resistance due to the electrolytic solution, the base weight amounts of the base material laminates 16 and 17 (base weight amounts of the entire laminates in which at least two base materials are stacked) are preferably 200 g/m² or smaller, more preferably 150 g/m² or smaller, and further preferably 130 g/m² or smaller. From the viewpoint of having superior cycle characteristics, the base weight amounts of the base material laminates 16 and 17 are preferably 70 g/m² or larger, more preferably 100 g/m² or larger, and further preferably 115 g/m² or larger.

A resin may be held in the base materials 16a, 16b, 17a, and 17b. For example, a resin may be an acrylic resin, an epoxy resin, a melamine resin, a phenolic resin, or the like, may be held on inner surfaces or outer surfaces of the base materials 16a, 16b, 17a, and 17b or on surfaces inside the pores in the base materials, and may be adhered onto the base materials 16a, 16b, 17a, and 17b in the embodiment. A resin may be held in a part of the base materials 16a, 16b, 17a, and 17b or may be held in the entireties of the base materials 16a, 16b, 17a, and 17b.

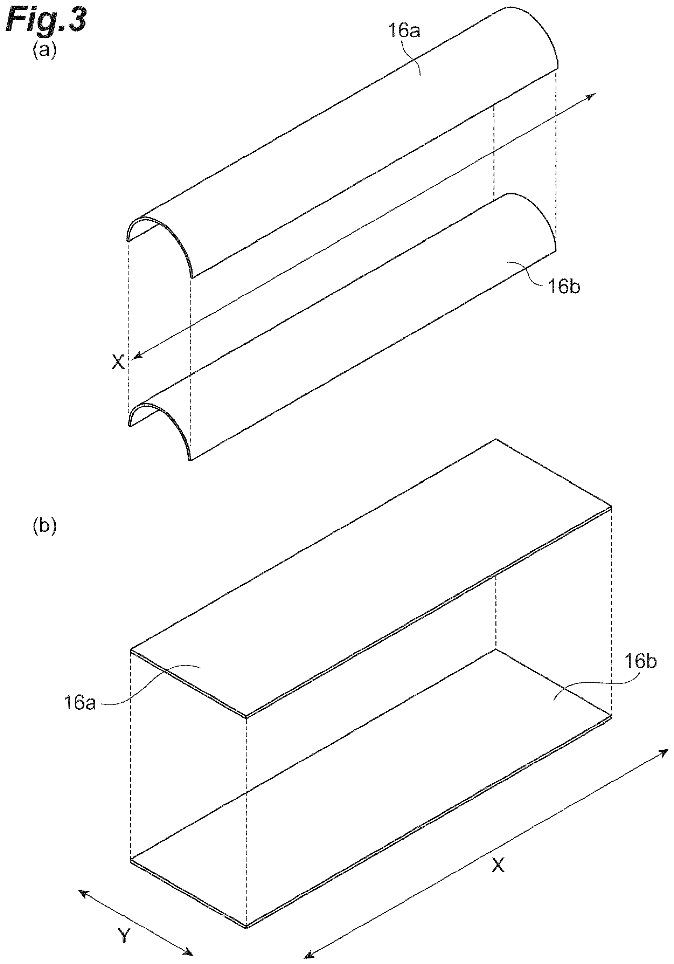

FIG. 3(a) is an exploded perspective view showing a main part of the tube 12a in FIG. 2 and specifically shows a perspective view in which the first base material laminate 16 (the first outer base material 16a and the first inner base material 16b) constituting a substantially half cylinder part of the tube 12a is exploded. FIG 3(b) is a schematic view in which the first outer base material 16a and the first inner base material 16b are straightened in a flat plane shape in order to describe tensile strengths of the first outer base material 16a and the first inner base material 16b shown in FIG. 3(a). Hereinafter, the first outer base material 16a and the first inner base material 16b will be described. However, the second outer base material 17a and the second inner base material 17b may be similar to the first outer base material 16a and the first inner base material 16b, respectively. That is, in the following description, the first outer base material 16a can be replaced with the second outer base material 17a, and the first inner base material 16b can be replaced with the second inner base material 17b.

In the embodiment, in the tube 12a, a ratio (S_{Y1}/S_{X1}) of a tensile strength S_{Y1} of the first outer base material 16a in a direction (Y direction) perpendicular to the axial direction to a tensile strength Sxi thereof in the axial direction (X direction) and a ratio (S_{Y2}/S_{X2}) of a tensile strength S_{Y2} of the first inner base material 16b in the Y direction to a tensile strength S_{X2} thereof in the X direction may differ from each other. The axial direction (X direction) indicates a direction in the long axis of a tube, and the direction (Y direction) perpendicular to the axial direction indicates a direction perpendicular (a direction orthogonal) to the axial direction (X direction) within the main surface of the base material.

The ratio (S_{Y1}/S_{X1}) of the tensile strength S_{Y1} of the first outer base material 16a in the Y direction to the tensile strength Sxi thereof in the X direction may be 3.0 or smaller, 2.0 or smaller, or 1.0 or smaller and may be 0.1 or larger, for example. In the first outer base material 16a, preferably, the tensile strength Sxi in the X direction is larger than the tensile strength S_{Y1} in the Y direction. Therefore, the ratio S_{Y1}/S_{X1} is preferably less than 1.0.

The ratio (S_{Y2}/S_{X2}) of the tensile strength S_{Y2} of the first inner base material 16b in the Y direction to the tensile strength S_{X2} thereof in the X direction may be 1.0 or larger, 1.5 or larger, or 2.0 or larger and may be 3.0 or smaller, for example. In the first inner base material 16b, preferably, the tensile strength S_{X2} in the X direction is smaller than the tensile strength S_{Y2} in the Y direction. Therefore, the ratio S_{Y2}/S_{X2} is preferably larger than 1.0.

A multiplied value ((S_{Y1}/S_{X1})×(S_{Y2}/S_{X2})) of the ratios S_{Y1}/S_{X1} and S_{Y2}/S_{X2} is preferably a value close to 1. The multiplied value of the ratios S_{Y1}/S_{X1} and S_{Y2}/S_{X2} is preferably 0.3 to 6.0, more preferably 0.5 to 3.0, and further preferably 0.7 to 1.5.

In the embodiment, in the tube 12a, any one of a ratio (S_{X1}/S_{X2}; first ratio) of the tensile strength Sxi of the first outer base material 16a in the X direction to the tensile strength S_{X2} of the first inner base material 16b in the X direction and a ratio (S_{Y1}/S_{Y2}; second ratio) of the tensile strength S_{Y1} of the first outer base material 16a in the Y direction to the tensile strength S_{Y2} of the first inner base material 16b in the Y direction may be larger than 1, and the other may be smaller than 1.

The first ratio (S_{X1}/S_{X2}) may be 0.1 or larger or 0.3 or larger and may be 3.0 or smaller. The ratio S_{X1}/S_{X2} is preferably larger than 1.0.

The second ratio (S_{Y1}/S_{Y2}) may be 3.5 or smaller or 3.0 or smaller and may be 0.1 or larger. The ratio S_{Y1}/S_{Y2} is preferably less than 1.0.

The tensile strength Sxi of the first outer base material 16a in the X direction and the tensile strength S_{Y1} thereof in the Y direction may be 2.0 N/mm or greater, 2.5 N/mm or greater, or 4.0 N/mm or greater. The tensile strength S_{X2} of the first inner base material 16b in the X direction and the tensile strength S_{Y2} thereof in the Y direction may be 2.0 N/mm or greater, 3.5 N/mm or greater, or 6.0 N/mm or greater.

For example, the tensile strength can be measured as follows. First, the tube 12a is cut into a cylindrical shape of which a length in the axial direction (X direction) is substantially 60 mm. Only the connection portion 15 of the cut tube is removed through cutting to have half-cylinder shapes. As samples having the half cylinder shapes, the inner base material and the outer base material are separated, thereby obtaining samples of the first outer base material 16a and the first inner base material 16b having substantially rectangular plane shapes with a length Lx (mm; substantially 60 mm) in the axial direction (X direction) and a length L_{Y} (mm; substantially the same as the length of the semicircle of the tube 12a) in a direction (Y direction) perpendicular to the axial direction, respectively. Regarding the samples, a tensile test is performed in each of the X direction and the Y direction under conditions of a grip-to-grip distance of 20 mm and a sweeping speed of 5 mm/min using a precision universal tester (for example, AUTOGRAPH (EZ-FX) manufactured by Shimadzu Corporation). The tensile strengths are calculated as values obtained by converting the maximum strengths at which the samples are ruptured into the strengths per unit length of the samples in the tensile direction (the maximum strength in the X direction/Lx and the maximum strength in the Y direction/L_{Y}).

In the embodiment, the fiber base material has fiber orientations. When the fiber base material is a woven fabric, since fibers are woven in a predetermined direction in a woven fabric, it can be a fiber base material having fiber orientations. When the fiber base material is a non-woven fabric, a fiber base material having fiber orientations means a non-woven fabric, of "non-woven fabric" defined in JIS L0222, in which fibers have an orientation in one direction. The fiber orientations of a fiber base material and the direction of the fiber orientation thereof can be confirmed visually.

When a base material has fiber orientations, the first outer base material 16a and the first inner base material 16b are stacked such that angles formed by the axial direction (X direction) of the tube 12a and the directions of the fiber orientation of the respective base materials 16a and 16b differ from each other.

The angle formed by the X direction and the direction of the fiber orientation in the first outer base material 16a is preferably smaller than the angle formed by the X direction and the direction of the fiber orientation in the first inner base material 16b. The angle formed by the X direction and the direction of the fiber orientation in the first outer base material 16a is preferably 0° to 45°, more preferably 0° to 30°, and further preferably 0° to 15°. The angle formed by the X direction and the direction of the fiber orientation in the first inner base material 16b is preferably 45° to 90°, more preferably 60° to 90°, and further preferably 75° to 90°.

When a base material has fiber orientations, in each of the first outer base material 16a and the first inner base material 16b, fibers are oriented in a predetermined direction within a plane of the base material. As a result, the tensile strengths differ from each other depending on the in-plane direction of the base material. The first outer base material 16a has the maximum tensile strength in a direction d1 that substantially coincides with the direction in which fibers are oriented. The direction d1 in which the first outer base material 16a has the maximum tensile strength forms an angle of preferably 0° to 45°, more preferably 0° to 30°, and further preferably 0° to 15° with respect to the axial direction of the tube 12a. Similarly, the first inner base material 16b has the maximum tensile strength in a direction d2 that substantially coincides with the direction in which fibers are oriented. The direction d2 in which the first inner base material 16b has the maximum tensile strength forms an angle preferably 45° to 90°, more preferably 60° to 90°, and further preferably 75° to 90° with respect to the axial direction of the tube 12a.

If the angles formed by the directions in which the base materials 16a and 16b have the maximum tensile strength (directions of the fiber orientation) and the X direction are set as described above, when a resin is held in a base material, more resin can be held, and thus the cycle characteristics can be further improved in the lead storage battery 1.

In the entire tube 12a (base material laminate 16), the ratio (S_{Y}/S_{X}) of the tensile strength S_{Y} in a direction perpendicular to the axial direction to the tensile strength Sx in the axial direction is preferably a value close to 1. For example, the ratio (S_{Y}/S_{X}) may be 0.5 to 2.6, preferably 0.6 to 2.5, and more preferably 0.8 to 2.3.

In the tube 12a of the present embodiment, the tensile strength of the entire base material laminate 16 can be enhanced with better isotropic properties. For this reason, in the lead storage battery 1 using the tube 12a constituted of this first base material laminate 16, for example, even when the positive electrode material 12c expands with use of the lead storage battery 1, a problem in which the tube 12a is easily damaged in a particular direction is less likely to occur. Particularly, when a porous non-woven fabric having a small pore diameter and a small thickness is used as a base material, the non-woven fabric tends to have a greater fiber orientation. Therefore, it is important to enhance the tensile strength of the entire first base material laminate 16 with better isotropic properties by establishing the foregoing relationship between the directions in which the first outer base material 16a and the first inner base material 16b have the maximum tensile strength (directions of the fiber orientation).

Subsequently, a method for manufacturing the lead storage battery 1 will be described. For example, the lead storage battery 1 according to the present embodiment is manufactured by a manufacturing method including an electrode manufacturing step of obtaining electrodes (positive electrodes and negative electrodes) and an assembly step of assembling constituent members including the electrodes and obtaining a lead storage battery.

The electrode manufacturing step has a positive electrode manufacturing step and a negative electrode manufacturing step. For example, the positive electrode manufacturing step has an active material holding tube manufacturing step and a finishing step.

In the active material holding tube manufacturing step, for example, first, a laminate by stacking four non-woven fabrics (non-woven fabrics which are the same as each other) having fiber orientations(a laminate in which the first outer base material 16a, the first inner base material 16b, the second inner base material 17b, and the second outer base material 17a are stacked in this order) is prepared as a fiber base material. At this time, the base materials are stacked across such that a direction corresponding to the axial direction and the direction of the maximum tensile strength (direction of the fiber orientation) form the foregoing angle between the first outer base material 16a and the second outer base material 17a and between the first inner base material 16b and the second inner base material 17b. In this laminate, the directions in which the first outer base material 16a and the second outer base material 17a have the maximum tensile strength may be the same directions as each other or may be different directions. Preferably, the directions are the same directions. In addition, the directions in which the first inner base material 16b and the second inner base material 17b have the maximum tensile strength may also be the same directions as each other or may be different directions. Preferably, the directions are the same directions.

Next, for example, the connection portions 15 are formed by providing a predetermined interval (an interval corresponding to an outer diameter D₁₂ of the tube 12a) and suturing the laminate. Thereafter, a cylindrical body group including a plurality of tubes 12a having a hollow cylindrical shape is obtained by widening a space between the first inner base material 16b and the second inner base material 17b between the connection portions 15 adjacent to each other at an interval. The tube group 13 can be obtained by dividing this cylindrical body group every predetermined number (2 to 19) of groups.

When a resin is held in a base material, for example, a method in which a base material formed to have a hollow cylindrical shape is impregnated with an emulsion realized by dispersing a resin into water and is then dried for 1 to 3 hours at a temperature chof 60°C to 130°C, for example. The average particle diameter of the resin in the emulsion may be 50 to 150 nm, for example. The average particle diameter of the resin is measured using a particle size distribution measurement device (for example, LS1320 manufactured by BECKMAN COULTER INC.). Specifically, a resin is dispersed into pure water, this is injected into the device main body, and measurement is performed under the following measurement conditions.
Dispersion solvent: H₂O-D
Refractive index of dispersion solvent: 1.33
Refractive index of sample: 1.5
Optical model: 1.5, rt780dPIDS
Execution time: for 60 seconds
Pump speed: 50%
Sample density: 1 g/mL

In the active material holding tube manufacturing step, after a resin is held in four base material laminates by a method similar to that described above, the laminates holding an acrylic resin may be molded into a cylindrical shape.

In the finishing step, for example, a positive electrode having an unformed positive electrode material is obtained by filling the insides of the tubes with the raw material for a positive electrode and the core bars, and then closing the lower connected seat at lower terminals of the tubes. In the finishing step, for example, a positive electrode having an unformed positive electrode material may be obtained by filling the insides of the tubes with a solvent such as water and dilute sulfuric acid, slurry including a raw material for a positive electrode, and the core bars, and then closing the connected seat (lower connected seat) at the lower terminals of the tubes.

In the negative electrode manufacturing step, for example, a negative electrode having an unformed negative electrode material is obtained by filling a negative electrode current collector (for example, a current collector lattice (a current lattice body, an expanded lattice body, or the like)) with a negative electrode material paste including a raw material for a negative electrode active material and then performing curing and drying. Curing is performed for 15 to 60 hours at an atmosphere having a temperature of 35°C to 85°C and a humidity of 50 to 98 RH%, for example. Drying is performed for 15 to 30 hours at a temperature of 45°C to 80°C, for example.

For example, a negative electrode material paste may further include the additives described above in addition to a raw material for a negative electrode active material. A negative electrode material paste may further include a solvent and sulfuric acid. Examples of a solvent include water and an organic solvent.

In the negative electrode material paste, when barium sulfate, a carbon material, short fibers for reinforcement, or a resin having a sulfone group and/or a sulfonate group is used as an additive, the formulation amount of barium sulfate is 0.01 to 2 parts by mass with respect to 100 parts by mass of a raw material for a negative electrode active material, for example. The formulation amount of a carbon material is 0.1 to 3 parts by mass with respect to 100 parts by mass of a raw material for a negative electrode active material, for example. The formulation amount of short fibers for reinforcement is 0.01 to 0.3 parts by mass with respect to 100 parts by mass of a raw material for a negative electrode active material, for example. The formulation amount of a resin having a sulfone group and/or a sulfonate group is 0.01 to 2 parts by mass in terms of a resin solid content with respect to 100 parts by mass of a raw material for a negative electrode active material, for example.

In the assembly step, for example, an electrode group is obtained by layering an unformed positive electrode and an unformed negative electrode with a separator therebetween and welding current collecting portions of electrodes having the same polarity with a strap. This electrode group is disposed inside a battery case, and an unformed battery is manufactured. Next, dilute sulfuric acid is input to an unformed battery and electrification is performed with a direct current for formation of the battery case. A lead storage battery is obtained by adjusting the specific gravity of sulfuric acid after formation to an appropriate specific gravity. The specific gravity (before formation) of sulfuric acid is 1.100 to 1.260, for example.

Formation conditions and the specific gravity of sulfuric acid can be adjusted in accordance with the size of the electrode. In addition, formation processing is not limited to being performed after the assembly step and may be performed during the electrode manufacturing step (tank formation).

The tube 12a of the lead storage battery 1 of the present embodiment can adopt various modification examples. For example, a cylindrical body having a hollow cylindrical shape by stacking three or more fiber base materials may be formed. In this case, at least two fiber base materials included in the cylindrical body need only satisfy the foregoing relationships between the outer base materials 16a and 17a and the inner base materials 16b and 17b. In addition, a non-woven fabric and a woven fabric may be used together. For example, one or more woven fabrics may be stacked in addition to two non-woven fabrics.

The lead storage battery according to the present embodiment is favorably used particularly as a lead storage battery for an electric vehicle such as a forklift and a golf cart.

### [Examples]

Hereinafter, the present invention will be described specifically with reference to examples, but the present invention is not limited to these examples.

### (Example 1)

As base materials, four polyolefin non-woven fabric sheets (including polyethylene and polypropylene with an average pore diameter of 20 µm and a base weight amount of 60 g/m²) having fiber orientations were stacked and were sutured 300 mm or longer in a manner of being substantially parallel to each other at an interval of 14.5 mm, and connection portions were formed. Next, the non-woven fabric sheets were cut at positions 3 mm to the outward side from joint portions in a manner of being substantially parallel to the joint portions, and a sheet-like laminate including the connection portions was obtained. After the sheet-like laminate was cut such that the length parallel to the joint portions became 294 mm, a core rod of 9 mmφ was inserted between the second and third non-woven fabric sheet, the sheet-like laminate was formed to have a hollow cylindrical shape, and a cylindrical body was obtained. At this time, four base materials were stacked in the order of a first outer base material, a first inner base material, a second inner base material, and a second outer base material. They were stacked such that both the angles formed by the directions in which the first outer base material and the second outer base material had the maximum tensile strength (directions of the fiber orientation) and the axial direction (X direction) of the cylindrical body became 0°. In addition, they were stacked such that both the angles formed by the directions in which the first inner base material and the second inner base material had the maximum tensile strength (directions of the fiber orientation) and the axial direction (X direction) of the cylindrical body became 90°.

Regarding the outer base material, the tensile strength Sxi in the X direction and the tensile strength S_{Y1} in a direction (Y direction) perpendicular to the axial direction were measured using AUTOGRAPH (EZ-FX, manufactured by Shimadzu Corporation). Similarly, regarding the inner base material and the cylindrical body (base material laminate) as well, the tensile strengths S_{X2} and Sx in the X direction and the tensile strengths S_{Y2} and S_{Y} in the Y direction were measured. In the measurement, the grip-to-grip distance was set to 20 mm, and the sweeping speed was set to 5 mm/min. Each tensile strength was set as shown in Table 1.

The cylindrical body was impregnated with an emulsion (average particle diameter: 78 nm) of an acrylic resin (AJ-1800 manufactured by DIC Corporation) for one minute. Thereafter, the cylindrical body was dried for one hour in a thermostatic oven at 100°C, and a tube (a cylindrical shape of 9 mmφ (inner diameter)×294 mm) in which the acrylic resin was held in the base material was obtained. The thickness of the tube (non-woven fabric in which the acrylic resin was held) was 0.2 mm when measured using a caliper.

### (Examples 2 to 8 and comparative examples 1 to 2)

With reference to the cylindrical body of Example 1, a tube was manufactured by a method similar to that of Example 1, except that four base materials (non-woven fabrics) were stacked such that the angle formed by the direction in which the outer base material had the maximum tensile strength and the axial direction of the tube and the angle formed by the direction in which the inner base material had the maximum tensile strength and the axial direction of the tube became the angles disclosed in Table 1. Table 1 shows the tensile strengths of the base materials.

### <Manufacturing of electrode plate>

A lead powder consisting of lead monoxide and red lead, and a core bar (a columnar shape of 2.7 mmφ×150 mm) made of lead-antimony (4.0 wt%)-arsenic (0.2 wt%)-tin (0.015 wt%) alloy were inserted into the obtained tube, three tubes having sealed upper end and lower end were arranged side by side, and an unformed positive electrode plate was obtained.

Meanwhile, a lead-antimony alloy (antimony content: 3 mass%) was melted, and a lattice body (dimensions: height 116.0 mm, width 58.0 mm, and thickness 2.4 mm) was manufactured by a casting method. Next, after barium sulfate 0.3 parts by mass, short fibers for reinforcement 0.03 parts by mass, lignin sulfonate 0.2 parts by mass, water 8 parts by mass, dilute sulfuric acid (specific gravity: 1.260) 10 parts by mass were added to a lead powder 100 parts by mass having lead monoxide as a main component, these were kneaded, and a negative electrode material paste was prepared. Further, after the lattice body was filled with the negative electrode material paste, curing and drying were performed under the following conditions, and an unformed negative electrode plate was obtained.
(Curing condition) temperature: 40°C, humidity: 98RH%, and time: 40 hours
(Drying condition) temperature: 60°C, and time: 24 hours

Using two sheets of this unformed negative electrode plate, the unformed negative electrode plates were set to face each other such that the positive electrode plate is sandwiched with a polyethylene separator therebetween, and a single positive electrode cell was manufactured.

### <Manufacturing of lead storage battery>

After an electrode plate group was manufactured by alternately stacking the single positive electrode cells with a polyethylene separator therebetween, a positive electrode terminal and a negative electrode terminal were welded to the electrode plate group. Next, after the electrode plate group was accommodated inside a battery case, a battery case lid was attached. Further, after dilute sulfuric acid (specific gravity: 1.260) (converted at 20°C) was injected through a liquid vent portion, battery case formation was performed, and a lead storage battery was manufactured. As conditions for battery case formation, the water temperature was set to 40°C, the charged amount (standard: theoretical formation electric quantity of the positive electrode active material) was set to 250%, and the time was set to 36 hours in a water tank. Thereafter, adjustment was performed such that the specific gravity of the electrolytic solution became 1.280 (converted at 20°C).

### <Measurement of initial capacity>

Initial discharge characteristics of the manufactured single positive electrode cell were evaluated at 0.2 CA. That is, after the fully-charged lead storage battery was neglected in the water tank (temperature: 30°C) for 24 hours, the lead storage battery was discharged to a final voltage of 1.7 V at 0.2 CA, and the discharge capacity at that time (5 hour-rate capacity, the discharge capacity at 0.2 CA, the rated capacity, and the unit: Ah) was measured. Thereafter, constant-current charging (current value: 0.1 CA) was performed 120% with respect to the discharge capacity, and a full-charge state was achieved. After this cycle was repeated 8 times, adjustment was performed such that the specific gravity of the electrolytic solution became 1.280 (converted at 20°C). Thereafter, the foregoing cycle of discharging and charging was performed twice again, and the capacity of the tenth cycle in total was taken as an initial capacity.

### <Evaluation of cycle characteristics>

Cycle durability of the manufactured single positive electrode cell was evaluated. That is, after the fully-charged lead storage battery having the specific gravity of the electrolytic solution of 1.280 (converted at 20°C) was neglected in the water tank (temperature: 40°C) for 24 hours, a cycle in which discharging was performed 3 hours at 0.25 CA and then charging was performed 5 hours at 0.18 CA was performed 100 times. After 100 cycles, adjustment was performed such that the specific gravity of the electrolytic solution became 1.280 (converted at 20°C), and the lead storage battery was neglected for 24 hours at 30°C. After being neglected, the lead storage battery was discharged to the final voltage of 1.7 V at 0.2 CA, and the discharge capacity at that time (5 hour-rate capacity, the discharge capacity at 0.2 CA, the rated capacity, and the unit: Ah) was measured. Thereafter, constant-current charging (current value: 0.1 CA) was performed 120% with respect to the discharge capacity, and a full charge state was achieved. 100 cycles of charging and discharging and checking of the discharge capacity were repeatedly performed, and this was repeated until the discharge capacity became 80% of the initial capacity. Tables 1 and 2 show the evaluation results of the cycle characteristics of the examples when the cycle characteristics in a case in which the directions in which the outer base material and the inner base material had the maximum tensile strength were the same directions (comparative examples 1 and 2) were considered to be 100.

**[Table 1]**

| | | Example 1 | Example 2 | Example 3 | Example 4 | Example 5 | Example 6 |
|---|---|---|---|---|---|---|---|
| Outer base material | Direction of maximum tensile strength (°) | 0 | 15 | 30 | 45 | 60 | 75 |
| | S_{X1 (N/mm)} | 6.5 | 5.8 | 5.1 | 4.4 | 3.8 | 3.1 |
| | S_{Y1 (N/mm)} | 2.4 | 3.1 | 3.8 | 4.4 | 5.1 | 5.8 |
| | S_{Y1}/S_{X1} | 0.4 | 0.5 | 0.7 | 1.0 | 1.3 | 1.9 |
| Inner base material | Direction of maximum tensile strength (°) | 90 | 90 | 90 | 90 | 90 | 90 |
| | S_{X2 (N/mm)} | 2.4 | 2.4 | 2.4 | 2.4 | 2.4 | 2.4 |
| | S_{Y2 (N/mm)} | 6.5 | 6.5 | 6.5 | 6.5 | 6.5 | 6.5 |
| | S_{Y2}/S_{X2} | 2.7 | 2.7 | 2.7 | 2.7 | 2.7 | 2.7 |
| S_{X1}/S_{X2} | | 2.7 | 2.4 | 2.1 | 1.8 | 1.6 | 1.3 |
| S_{Y1}/S_{Y2} | | 0.4 | 0.5 | 0.6 | 0.7 | 0.8 | 0.9 |
| Tube | S_{X} | 8.9 | 8.2 | 7.5 | 6.8 | 6.2 | 5.5 |
| | S_{Y} | 8.9 | 9.6 | 10.3 | 10.9 | 11.6 | 12.3 |
| | S_{Y}/S_{X} | 1.0 | 1.2 | 1.4 | 1.6 | 1.9 | 2.2 |
| Cycle characteristics | | 157 | 148 | 138 | 128 | 119 | 109 |

**[Table 2]**

| | | Example 7 | Example 8 | Comparative Example 1 | Comparative Example 2 |
|---|---|---|---|---|---|
| Outer base material | Direction of maximum tensile strength (°) | 90 | 30 | 90 | 0 |
| | S_{X1 (N/mm)} | 2.4 | 5.1 | 2.4 | 6.5 |
| | S_{Y1 (N/mm)} | 6.5 | 3.8 | 6.5 | 2.4 |
| | S_{Y1}/S_{X1} | 2.7 | 0.7 | 2.7 | 0.4 |
| Inner base material | Direction of maximum tensile strength(°) | 0 | 60 | 90 | 0 |
| | S_{X2 (N/mm)} | 6.5 | 3.8 | 2.4 | 6.5 |
| | S_{Y2 (N/mm)} | 2.4 | 5.1 | 6.5 | 2.4 |
| | S_{Y2}/S_{X2} | 0.4 | 1.3 | 2.7 | 0.4 |
| S_{X1}/S_{X2} | | 0.4 | 1.3 | 1.0 | 1.0 |
| S_{Y1}/S_{Y2} | | 2.7 | 0.7 | 1.0 | 1.0 |
| Tube | S_{X} | 8.9 | 8.9 | 4.8 | 13.0 |
| | S_{Y} | 8.9 | 8.9 | 13.0 | 4.8 |
| | S_{Y}/S_{X} | 1.0 | 1.0 | 2.7 | 0.4 |
| Cycle characteristics | | 160 | 125 | 100 | 100 |

As shown in Tables 1 and 2, the cycle durability increased as the difference between the angles between the directions in which the outer base material and the inner base material had the maximum tensile strength (directions of the fiber orientation) and the axial direction increased. This is because the base material at a part having a weak strength against expansion of the active material was torn and the active material flowed out. Thus, it is speculated that when there is a significant difference between angles between the directions in which the outer base material and the inner base material have the maximum tensile strength (directions of the fiber orientation) and the axial direction, the strength becomes uniform in its entirety, a situation in which a base material is torn in a direction of a weak strength is less likely caused, and the cycle durability is enhanced (cycle characteristics are improved).

### Reference Signs List

1 Lead storage battery
10 Positive electrode
12a Active material holding tube
12b Core metal
12c Positive electrode material
16a, 16b, 17a, 17b Fiber base material (base material)

## Claims

1. An active material holding tube formed to have a hollow cylindrical shape by stacking at least two fiber base materials,
wherein the two fiber base materials have different ratios of a tensile strength in a direction perpendicular to an axial direction to tensile strengths in the axial direction from each other.

2. The active material holding tube according to claim 1,
wherein in the two fiber base materials, an outer fiber base material has the tensile strength in the axial direction greater than the tensile strength in the direction perpendicular to the axial direction, and an inner fiber base material has the tensile strength in the axial direction smaller than the tensile strength in the direction perpendicular to the axial direction.

3. An active material holding tube formed to have a hollow cylindrical shape by stacking at least two fiber base materials,
wherein in the two fiber base materials, any one of a first ratio indicating a ratio of a tensile strength in an axial direction of an outer fiber base material to a tensile strength in the axial direction of an inner fiber base material and a second ratio indicating a ratio of a tensile strength in a direction perpendicular to the axial direction of the outer fiber base material to a tensile strength in the direction perpendicular to the axial direction of the inner fiber base material is larger than 1, and the other is smaller than 1.

4. The active material holding tube according to claim 3,
wherein the first ratio is larger than 1, and the second ratio is smaller than 1.

5. An active material holding tube formed to have a hollow cylindrical shape by stacking at least two fiber base materials,
wherein the two fiber base materials have fiber orientations and are stacked such that angles formed by an axial direction of the active material holding tube and directions of the fiber orientations differ from each other.

6. The active material holding tube according to claim 5,
wherein in the two fiber base materials, an angle formed by the axial direction and the direction of the fiber orientation of an outer fiber base material is smaller than an angle formed by the axial direction and the direction of the fiber orientation of an inner fiber base material.

7. The active material holding tube according to any one of claims 1 to 6,
wherein the active material holding tube has a ratio of the tensile strength in the direction perpendicular to the axial direction to the tensile strength in the axial direction of 0.5 to 2.6.

8. The active material holding tube according to any one of claims 1 to 7,
wherein a base weight amount of at least one of the two fiber base materials is 50 g/m² or larger.

9. An electrode comprising:
the active material holding tube according to any one of claims 1 to 8; and
a core bar and an electrode material disposed inside the active material holding tube.

10. A lead storage battery comprising the electrode according to claim 9 as a positive electrode.
